# EUROPEAN PATENT APPLICATION

(11) **EP 4 772 259 A1**
(43) Date of publication of application: **08.07.2026**
(21) Application number: 25223447.1
(22) Date of filing: 15.12.2025
(51) Int. Cl.: B01D 29/03, B01D 29/64, B01D 29/90, B01D 35/06

(54) **SEPARATOR**

(30) Priority: 03.01.2025 GB 202500037
(71) Applicant: Adey Holdings (2008) Limited, Haresfield, Stonehouse GL10 3EZ (GB)
(72) Inventor: Pathan, Kashem, Worcester, WR5 1AD (GB); Button, Mark, Westhoughton, BL5 3DP (GB)
(74) Representative: Noble, Frederick

(57) **Abstract**

A separator 10 for removing particles from suspension in a fluid, comprising: an inlet 26a and an outlet 26b for fluid; a mesh 32 between the inlet and the outlet; a turbine 33 comprising one or more vanes 40 to allow a flow of fluid through the separator to rotate the turbine; and one or more brushes 42 or scrapers fixed to the turbine for removing particles from the mesh.

## Description

The present invention relates to a separator suitable for separating particles from a fluid flow and particularly but not exclusively to a filtration device used in a hydronic heating system.

### BACKGROUND TO THE INVENTION

In a typical heating system, water is circulated by a pump through several radiators, possibly a heat exchanger in a hot water cylinder, and a boiler. During circulation, solid particles (for example, iron oxide) which have come loose from the interior of the radiators and pipework can become suspended in the water. Solid particles can also be present as contaminants in the water originally supplied to the system, and the water can become contaminated by dirt where an open expansion tank forms part of the system. These solid particles can cause malfunction if they build up in the boiler or pump, and reduce the effectiveness of the heating system by restricting the flow of water and clogging radiators. The water in a heating system should therefore be continually cleaned to remove solid particles as far as possible.

Various devices are known for removing particles from suspension in a flow of water.

Typically, these devices include a magnet for attracting ferrous particles, and may also include mechanical separation means for removing nonmagnetic particles.

Nonmagnetic particles may be removed by causing a portion of the water to flow through a separation chamber, within which obstruction means are disposed to slow the flow. Particles will then fall out of suspension and become trapped in cavities, which can easily be cleaned during an annual service. Only a portion of the flow is slowed, so that the overall flow rate in the heating circuit is not significantly reduced.

Devices of this type are disclosed for example in GB2486173, GB2486172 and GB2491246.

Mechanical separation means such as meshes are known. One challenge when designing suitable meshes is the relatively small size of the particles that need to be removed. The small size of the particles means that a mesh with apertures that are small enough to catch the particles is rapidly blocked as it catches all particles larger than mesh apertures. Blockages impede the flow of water through the mesh and therefore through the system, so frequent maintenance is required in order to manually remove the debris blocking the mesh. Frequent maintenance is inconvenient to both the supplier of the separator and the customer. It is generally undesirable to have a heating system component that needs maintenance more frequently than, say, once a year.

Using magnets has therefore been preferred, because magnetic filters can catch very fine particles, as long as they are magnetic, without clogging a mesh. However, the strong magnets used for effective filtration are costly and are made from and rare materials. Neodymium in particular is very expensive due to the cost associated with its extraction and processing from raw materials. Very strong magnets are required in current designs in order to capture the debris and prevent it re-entering the circuit. The strength requirement for the magnet means that the required materials can be very expensive.

Additionally, some small debris particles are not magnetic, and are not always effectively filtered by magnetic filters.

It is an object of the present invention to reduce or substantially obviate the aforementioned problems.

### STATEMENT OF INVENTION

According to the present invention there is provided a separator for removing particles from suspension in central heating and/or cooling system fluid, the separator comprising:
an inlet and an outlet for fluid;
a mesh between the inlet and the outlet;
a turbine comprising one or more vanes to allow a flow of fluid through the separator to rotate the turbine; and
one or more brushes or scrapers fixed to the turbine for removing particles from the mesh.

The mesh obstructs particles suspended in fluid that flow through the separator. In this way, particles of debris can be trapped behind the mesh and prevented from flowing through the filter, hence being removed from the fluid flow in a system such as a central heating system. The debris is subsequently dislodged from the mesh by the one or more brushes on the turbine. The moving brushes prevent the mesh from becoming clogged.

The brushes or scrapers are positioned and configured to be in contact with the mesh and to scrub or scrape the surface of the mesh on the inlet side of the mesh, so as to release particles which have been trapped by the mesh, on the inlet side. The brushes / scrapers scrub or scrape the surface of the mesh, being driven around by the motion of the turbine, which in turn is driven by the flow of water through the filter.

The mesh has apertures to allow fluid to pass through the filter. Apertures of the mesh may be smaller than in typical prior art designs used with central heating systems, as problematic blockages of small apertures should be avoided by the brushes.

Particles dislodged from the mesh by the brushes remain in suspension in the water, on the inlet side of the filter. Although particles will still build up in the filter, they should not clog the mesh. They may continually circulate on the inlet side of the mesh, until they are cleaned out. The filter may be cleaned for example annually, when the boiler is serviced.

Preferably, fluid flows upwardly towards and through the mesh in use, particles being collected on an underside of the mesh. In other words, the pre-filtration side of the mesh is the underside and the post-filtration side of the mesh is the upper side. When particles are dislodged from the mesh by brushes / scrapers, they will (as described in more detail below) move downwardly, preferably towards a particle settlement region where they will be retained until the filter is cleaned.

A particle settlement region may be provided at a lower end of the separator. Preferably, a divider is provided for defining the particle settlement region below the divider. Preferably, the divider is designed to allow particles to pass through apertures in the divider into the settlement region, but to ensure a relatively low rate of flow of fluid beneath the divider. The settlement region is protected by the divider from the flow of fluid above the divider, so that the settlement region is a region of low-flow. This minimises particles becoming re-entrained into the flow once they have settled below the divider. At least on average, more particles will settle out of the flow and pass through the divider into the settlement region than particles already in the settlement region become re-entrained in the flow.

For this purpose, the divider may be provided with bafflers for slowing flow of fluid. The bafflers may be for example protrusions which extend from the surface of the divider, on the side of the divider facing away from the settlement region. When fluid (and particles carried by the fluid) hits the baffler, it loses momentum and this tends to cause entrained particles to drop out of suspension. An aperture in the divider may be disposed adjacent the baffler so that particles dropping out of suspension pass through the divider and into the settlement region.

Preferably the divider is substantially conical in form, with a wide lower end of the divider and a narrow upper end of the divider.

Preferably, the separator is arranged with flow guiding formations arranged to direct flow downwardly from the inlet, through a change of direction in a lower region of the separator and then upwardly towards and through the mesh.

This contra-flow arrangement is designed so that the downwardly flowing water draws particles entrained in the fluid, including particles which have been scraped / brushed off the mesh, down towards the bottom of the separator. The change in direction means there is a point of zero velocity where some particles are likely to fall out of suspension. Any particles remaining in the flow are then carried up, towards the mesh and are captured on the underside of the mesh as fluid flows through the mesh. When particles are dislodged from the underside of the mesh by the brushes, they are carried downwards by the downward flow, and through the change of direction again, where more particles will fall out of suspension.

Therefore, both the upward and downward flows are in contact with the underside of the mesh. Preferably, a wall is provided for separating the upward and downward flows, at least along a major part of the length of the separator.

In some embodiments, the vanes of the turbine tend to direct water downwards, performing a dual role of driving the turbine and directing the water flow. The turbine vanes may extend from a turbine shaft, and the turbine shaft may be in the form of a hollow cylinder. The upward flow of fluid is inside the hollow cylinder, so that the cylindrical turbine shaft forms the wall for separating upward and downward fluid flows.

The one or more vanes of the turbine advantageously mean that there is no need for external driving means to rotate the turbine and hence the brushes. Instead, fluid flowing through the separator pushes the vanes and rotates the turbine.

The one or more vanes may be disposed on an outer cylindrical surface of a body of the turbine. The body of the turbine may be in the form of a cylindrical shell. The one or more vanes may be disposed substantially perpendicularly from the outer surface of the turbine body.

The one or more vanes may be disposed around an axis of rotation of the turbine.

Each of the one or more vanes may spiral around the turbine to direct the fluid around the turbine downwards. This also allows a substantially radial (with respect to the axis of rotation of the turbine) flow into the filter and towards the turbine to rotate the turbine.

The turbine may be hollow, to allow fluid to flow through the inside of the turbine. Having a vane-driving flow from the inlet, on the outside of the turbine, and then an flow through the inside of the turbine, towards the mesh, is advantageous. The filter may preferably be oriented in use so that the vane-driving flow from the inlet, on the outside of the turbine, is a substantially downward flow, and so that the flow through the inside of the turbine, towards the mesh, is an upward flow. The flow from the inlet drives the turbine, then flows back up through the centre of the turbine and any entrained particles are captured in the mesh. The brushes then release particles from the mesh which are drawn back down in the outer flow. As the flow changes direction, the particles will tend to settle out of the flow and be retained in the bottom of the filter. As will be described, further features may be provided so that these particles are also continually captured and retained in the bottom of the filter so that they do not circulate continuously in the filter body.

The upwards flow moves the fluid through the mesh for filtering and re-entry to the central heating system. The downwards vane-driving flow can take up dislodged debris and take it away from the mesh round the outside of the turbine.

The turbine may have an flange, and the one or more brushes may be disposed on the flange of the turbine. This enables brushing of a flat mesh surface. Preferably the flange is disposed on an upper end of the turbine.

The mesh may have a substantially circular outer edge. This enables the turbine to fully clean the mesh.

The mesh may have apertures of around 300 microns. The mesh may have apertures dimensioned in the range of 200 to 800 microns.

The one or more brushes may be disposed radially on the upper flange. This enables the whole area of the mesh with a substantially circular edge to be brushed.

A deflector may be disposed in the inlet of the separator. The deflector may deflect the fluid as it travels through the inlet to set up a swirl of fluid inside the separator. A swirl of fluid helps to drive the turbine, rather just relying on the angled vanes of the turbine to convert a radial flow into rotation. Note that in other embodiments, the inlet may be configured in other ways to create a swirling flow. For example, the inlets may be positioned substantially tangentially, as is known for example from GB2402894.

The deflector may be a substantially planar wall that blocks a portion of the inlet.

The separator may have a chamber containing the mesh, and having a removable cap. The removable cap is detachable from the chamber. Debris that has collected in the separator can thereby be removed with ease by a user. Preferably, the removable cap is on an underside of the separator, and the separator is configured so that debris will collect at the bottom, in the cap. Therefore, the cap can be removed and cleaned to remove the debris easily.

The chamber and removable cap may for example each comprise a thread so that the removable cap can screw onto the chamber.

The separator may include a divider. The divider separates a low-flow region, from a high-flow region. The mesh is disposed within the high-flow region. This allows debris to settle in the low-flow region where it is partly protected from the flow of the fluid through the separator and therefore the debris is less likely to flow back into other portions of the separator. The low-flow region is a region in which debris collects and is retained. Preferably, the low-flow debris retention region is at the bottom of the filter when in use, so that gravity tends to keep particles in the retention region. The slower flow in the retention region will mean that particles tend to stay in the retention region once they are in the retention region.

The divider may be for example in the form of a conical shell, with the low-flow region being the region inside the shell.

Particles captured by the mesh are scraped or scrubbed off the mesh by the brushes, and reintroduced into the downwardly-flowing inlet water. However, the downwardly-flowing inlet water circulates towards the divider, and some of it passes through apertures in the divider into the low-flow region, where the debris will settle out of the flow. Of course, not all debris will be captured in this way, and some may continue to be caught by the mesh again, where it will be scrubbed off and re-introduced again into the downward flow. It may take some time for a particular particle of debris to enter the low-flow retention region and stay there. However, it is found that overall in typical systems the filter provides adequate capturing performance, and the amount of debris circulating inside the separator is not generally so large as to be problematic.

The divider may include one or more bafflers to remove some momentum from the fluid and direct a portion into the low-flow region. Each baffler may extend from the surface of the divider, on the side of the divider facing the high-flow region. The bafflers may be positioned adjacent to an aperture in the divider. The bafflers may be oriented perpendicular to the swirl or flow of the fluid such that it impedes and slows the flow. Flow will hit the baffler and debris will drop through the aperture into the low-flow region on the other side of the divider.

In one embodiment, the apertures are in the form of slots, and the bafflers may extend along one side of the slot.

The divider may be in the form of a conical shell. The slots may extend substantially in a straight line from the vertex of the cone to the base, with the base of the cone being adjacent the base of the separator. The bafflers may extend along one side of each slot. The shape of the divider is such that the fluid can swirl around the conical divider, so that the fluid flow is substantially perpendicular to a longitudinal axis of the one or more bafflers.

The upper flange of the turbine may have one or more apertures to allow debris that has been dislodged from the mesh to be sucked downwards towards the bottom of the separator by the fluid flow on the outside of the turbine. The one or more apertures may be near an edge of the upper flange. In this way, the apertures are above the downwards flow of fluid around an edge of the turbine. Therefore, the debris can flow away from the mesh after it has been dislodged, towards the bottom of the separator, where it can be cleaned out by removing the removable cap.

The separator may include a magnet. This enables the separator to remove magnetic particles that are suspended in the liquid. The magnet may be disposed in the low-flow region, on the other side of the divider from the turbine and the mesh. This advantageously means that magnetic particles which collect in the low flow region are captured and retained, and prevented from re-entering the flow. They can be cleaned out easily by removing the removable cap at the bottom of the separator.

The magnet may be disposed substantially centrally at the bottom of the separator, in the low flow region. Alternatively, the magnet may be positioned above the turbine or mesh and/or external to a housing of the separator.

Compared to prior art magnetic filters, the magnet may be relatively small and may be a less-powerful and lower-cost magnet, for example made from ferrite materials rather than rare earth elements. Despite its relatively low strength, the magnet can retain particles effectively because the particles are effectively directed onto the magnet by the combination of the mesh, downward flowing stream, and baffler. When the particles are in the vicinity of the magnet they are in a slower, lower-energy flow, and the magnet is able to capture and retain the particles despite its relatively low strength. Even if some particles happen to come loose from the magnet and escape the removable cap, the overall effectiveness of the filter is not compromised since they will be captured by the mesh again.

Whereas in prior art magnetic filters, the magnet has to be powerful enough to separate particles from the flow and retain them, in the present invention it is primarily the mesh, turbine and baffle arrangement which separates the particles from the flow and directs them into the removable cap. The job of the magnet is simply to retain the particles once they are there.

In other embodiments, magnets may be placed in other positions. For example, the magnet may be positioned above the turbine or mesh and/or external to a housing of the separator.

The inlet and outlet may be concentric. This may make it easier to install the separator. The separator may comprise a casing that surrounds the turbine and filter. The casing may engage with the inlet in the concentric embodiment. An edge of the mesh may be substantially flush with the edge of the casing. Therefore, the casing prevents fluid from flowing to the outlet before it has passed through the mesh in the concentric embodiment. In embodiments of the invention with discrete inlets and outlets, for example one above the other, the inlet and outlet can be positioned so that the fluid must flow through the mesh before exiting the separator, without the need for a casing of this type.

The separator may be connectable to a central heating system. This is to enable debris to be removed from a central heating system. The debris may otherwise block parts of the central heating system and reduce the efficiency of the system.

The central heating system fluid is generally water, although it is likely that chemicals, for example corrosion inhibitors, have been added. The filter is suitable for use also in systems that can cool by circulating chilled fluid, in which case the system fluid may be for example glycol-based.

The separator may be isolatable from a wider system by an inlet isolation valve and an outlet isolation valve. Therefore, in use, the inlet and outlet can be switched off to isolate the separator. A bucket can be placed underneath the separator, and the removable cap can be removed. Then the removable cap can be cleaned and the debris washed off and removed. The chamber can also be removed from a connection component if required, and the mesh cleaned in this way.

A bleed valve and/or pressure release valve may be provided in order to release pressure in the separator before opening the separator for cleaning.

### BRIEF DESCRIPTION OF THE DRAWINGS

For a better understanding of the present invention, and to show more clearly how it may be carried into effect, reference will now be made by way of example only to the accompanying drawings, in which:
Figure 1 is a perspective view of a first embodiment of a separator according to the invention, attached to part of a central heating system;
Figure 2 is a perspective view of the body portion of the separator embodiment of Figure 1;

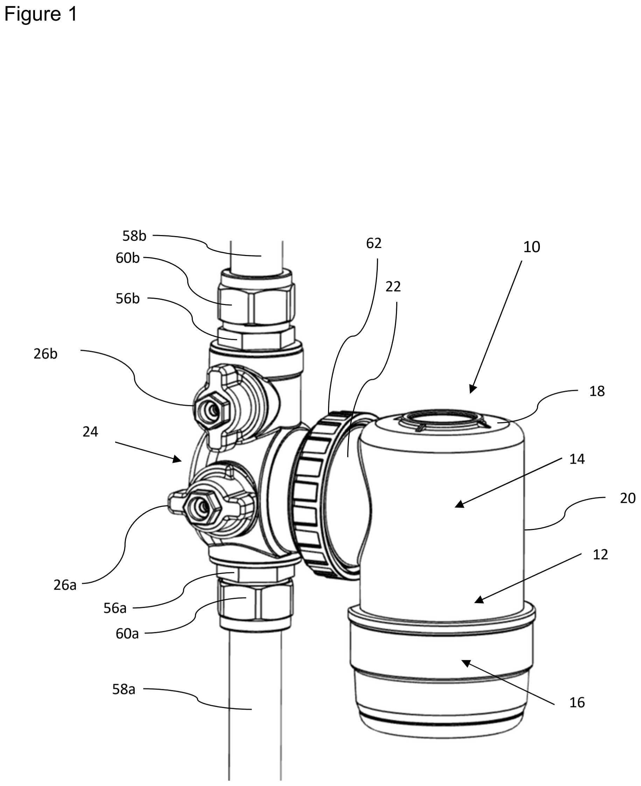

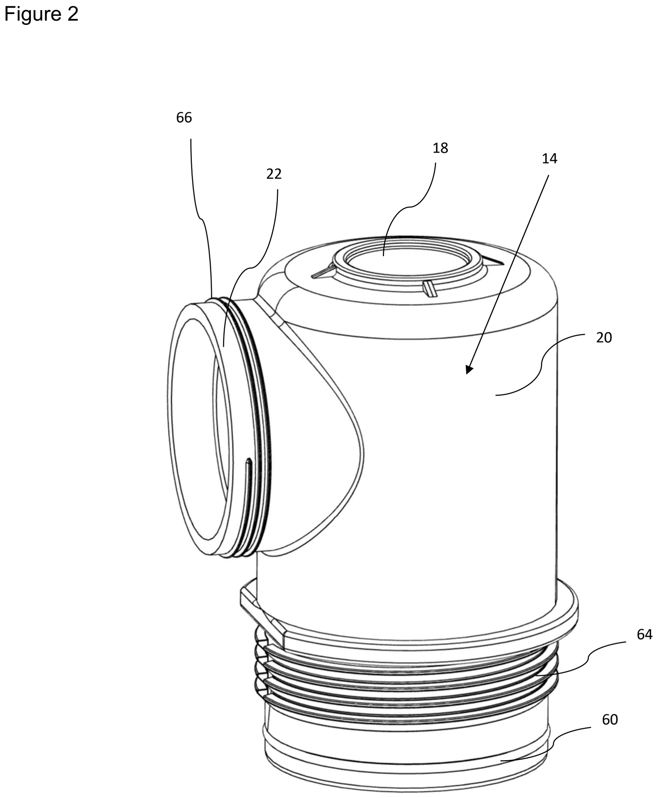

Figure 2 is a perspective view of the removable cap portion of the separator embodiment of Figure 1;

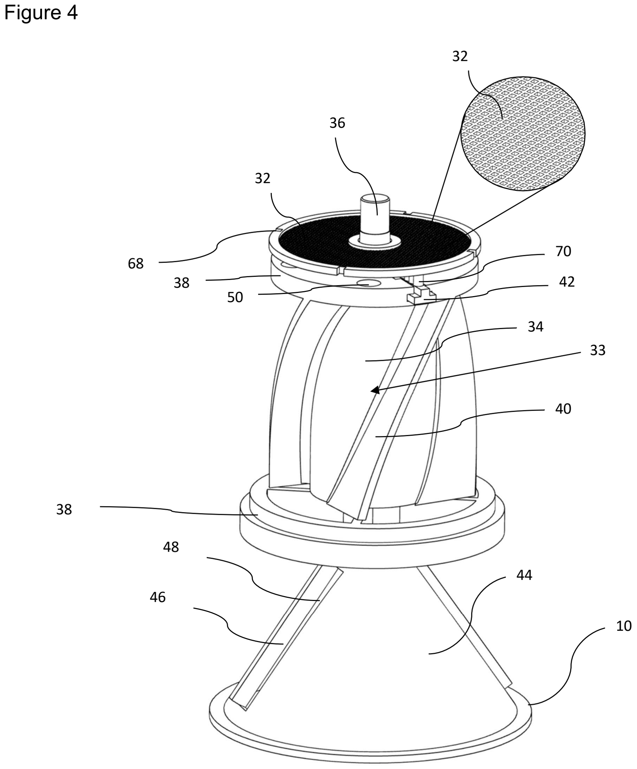

Figure 4 is a perspective view of interior components of the separator of Figure 1, with a close-up view of the mesh;

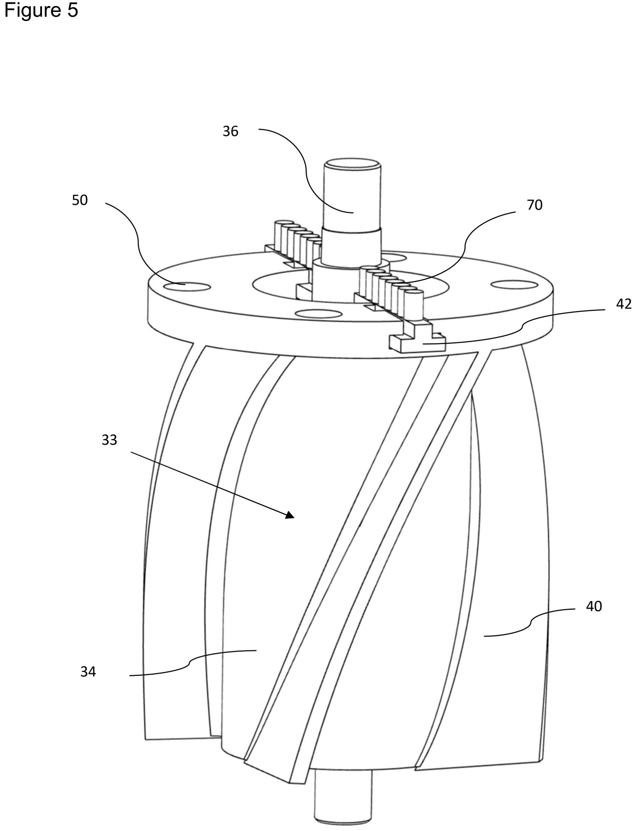

Figure 5 is a perspective view of the turbine of the separator embodiment in Figure 1;

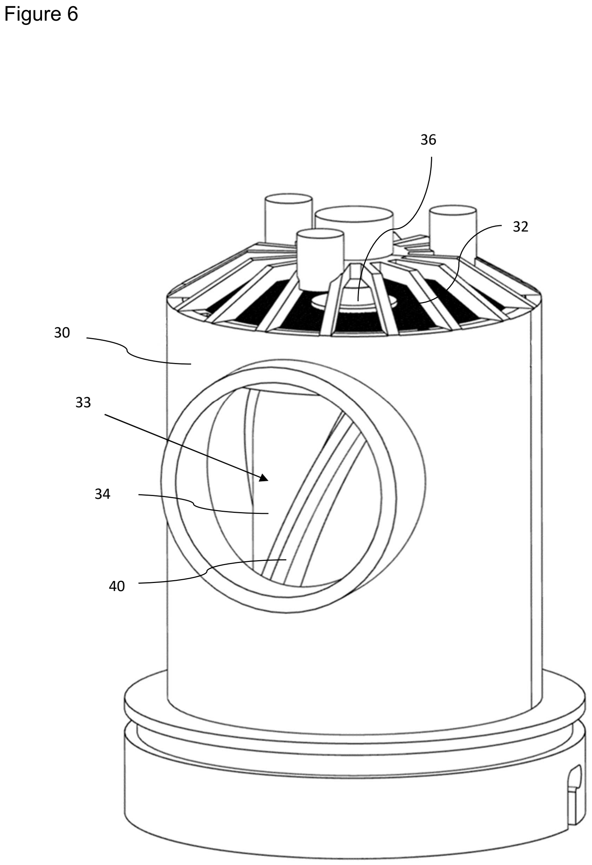

Figure 6 is a perspective view of the turbine of the separator embodiment of Figure 1, enclosed in a casing;

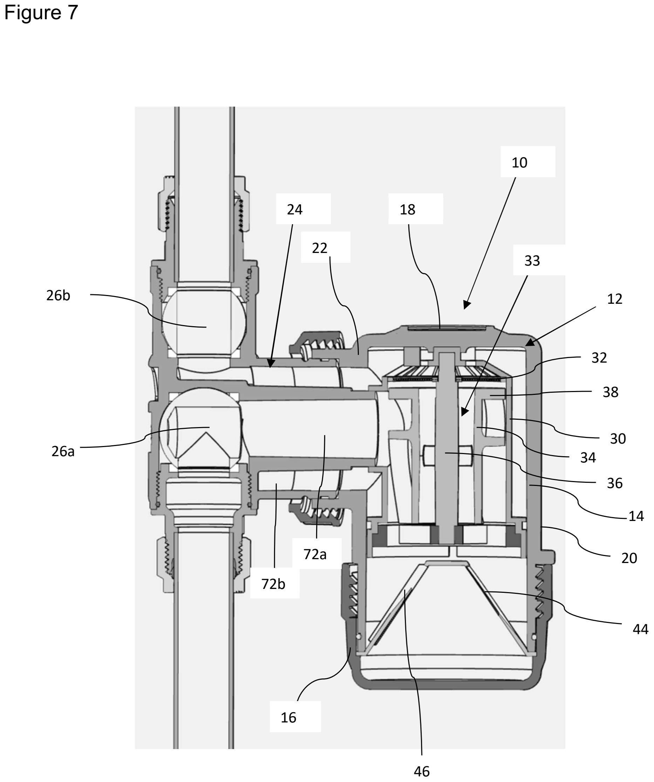

Figure 7 is a cross-section through the separator of Figure 1;

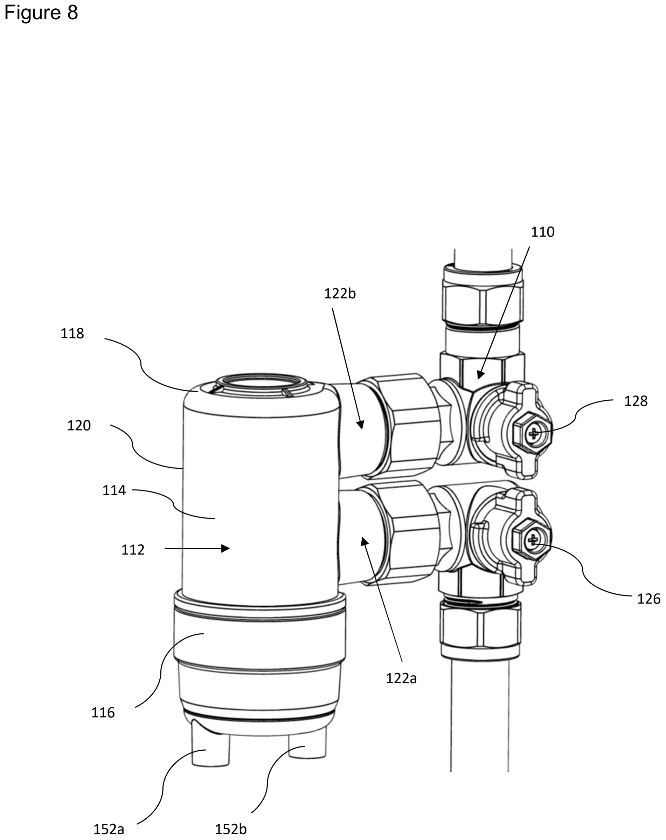

Figure 8 is a perspective view of a second embodiment of a separator according to the invention, attached to a part of a central heating system;

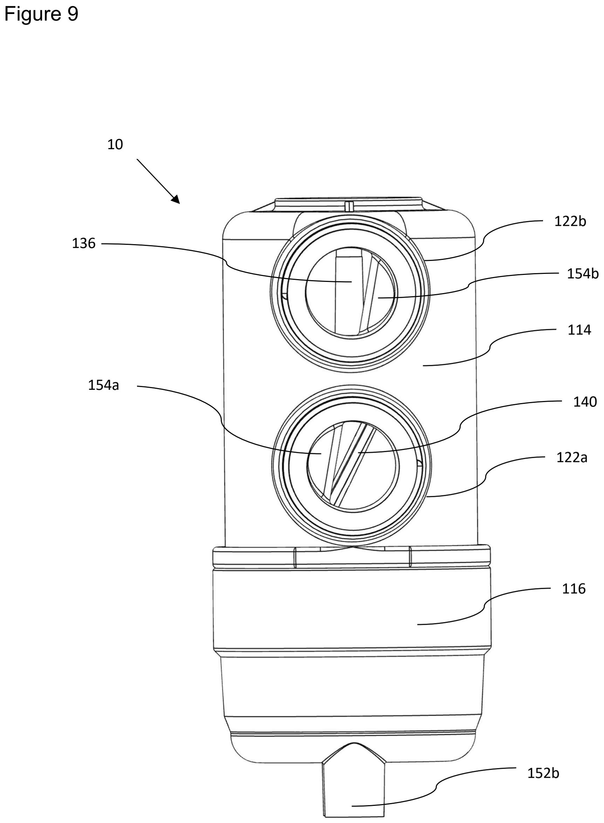

Figure 9 is a perspective view of the separator of Figure 8, detached from the central heating system;

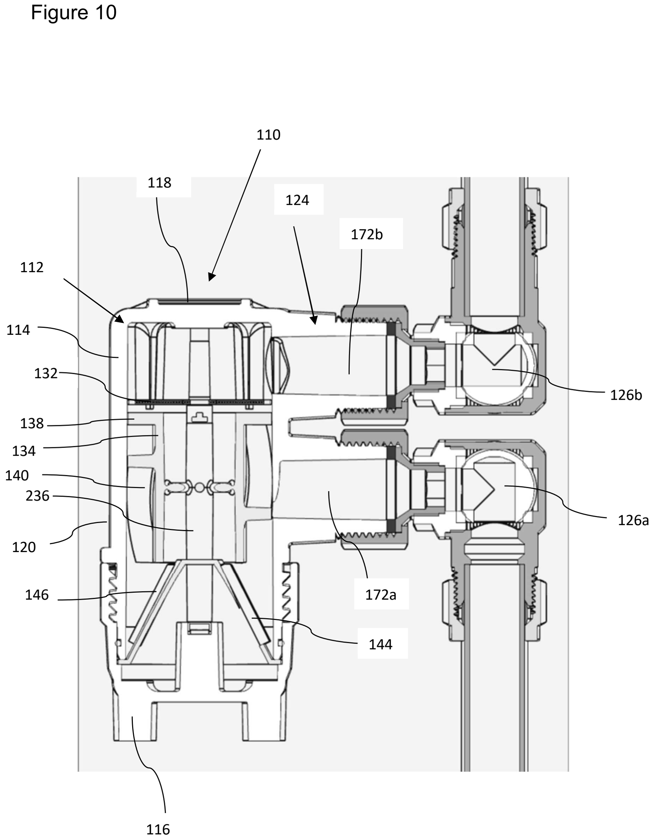

Figure 10 is a cross-section through the separator of Figure 8;

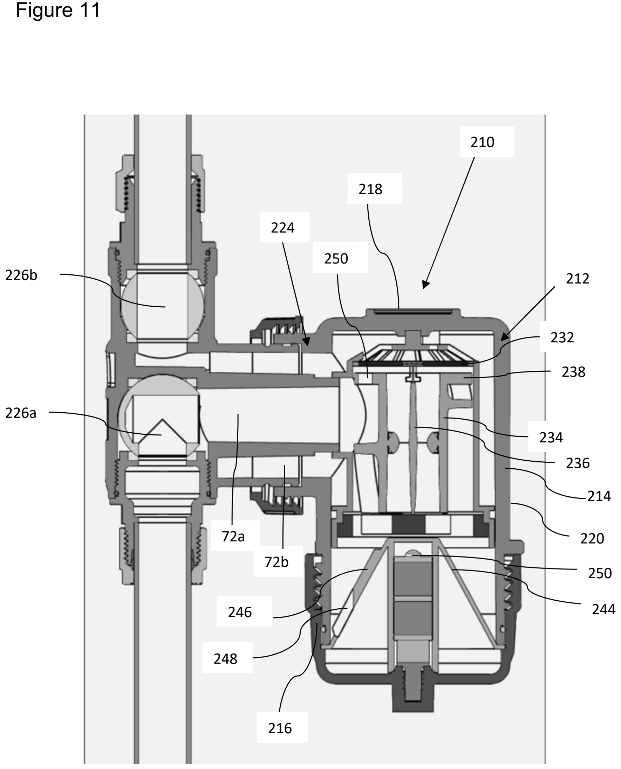

Figure 11 is a cross-section through a third embodiment of a separator according to the invention.

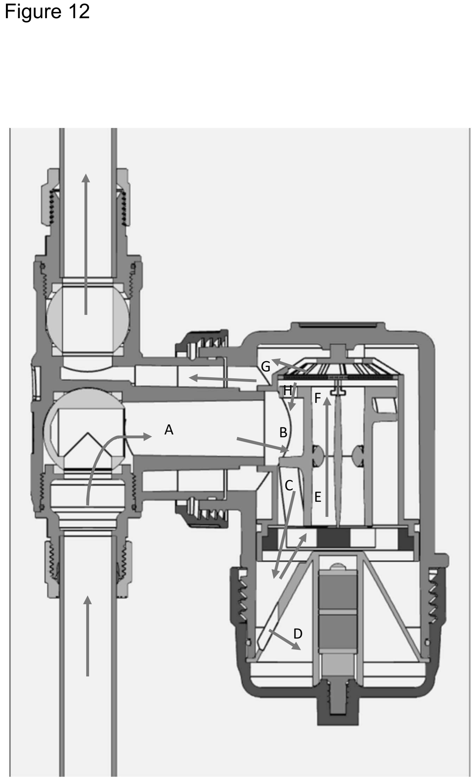

Figure 12 is the cross-section of Figure 11, annotated to show the flow of fluid through the separator.

### DESCRIPTION OF PREFERRED EMBODIMENTS

Referring firstly to Figure 1, a separator for separating particles from suspension in a fluid is indicated generally at 10. The separator 10 is shown in situ, attached to the pipes of a central heating system. A housing 12 is provided, comprising a body portion 14 and a removable cap 16. The body portion 14 is a substantially cylindrical shell, comprising a top 18 and a cylindrical wall 20. As shown in the drawings, the separator 10 is designed to be oriented in use such that the removable cap 16 is at the bottom of the device.

The body portion 14 comprises a thread (64, Figure 2) at a lower edge of the body portion 14. The removable cap 16 comprises a thread that engages with the thread of the body portion 14. The removable cap 16 thereby screws on to the body portion 14.

The separator 10 is engageable with a connection component 24, which connects the separator 10 to the central heating system. The connection component 24 comprises an inlet 56a and an outlet 56b. The connection component 24 also comprises a corresponding inlet valve 26a and outlet valve 26b to isolate the separator 10 from the central heating system. The connection component 24 is substantially T-shaped. Two ends of the connection component 24 engage with the pipes of the heating system (an inlet and outlet respectively). One end of the connection component 24 is engageable with an extension 22 of the separator 10.

An inlet channel 72a and outlet channel 72b (shown in Figure 7) go through the connection component 24 and through the extension 22. In particular, the end of the connection component 24 that engages with extension 22 of the separator 10 comprises both an inlet channel and an outlet channel. The inlet channel and outlet channel are concentric (shown in Figure 7). That is to say, the inlet channel is formed by a cylindrical pipe. The outlet channel is formed by a cylindrical pipe that surrounds the inlet pipe. The outlet pipe has a larger diameter than the inlet pipe.

In the first embodiment, the connection component 24 (and thereby separator 10) is attached by making two cuts to the heating circuit pipes 58 a set distance apart. Brass compression fittings 60 are used to fit the inlet 56a and outlet 56b to respective open ends 58a, 58b of the heating circuit pipe 58.

The separator 10 has an extension 22. The separator 10 attaches to the connection component 24 via the extension 22. An exterior wall of the extension 22 is substantially cylindrical. The extension 22 extends substantially perpendicularly from a tangent of the wall 20 of the body portion 14. The extension 22 can be attached to the connection component 24 via a collar 62. The extension 22 comprises a thread. The collar 62 comprises a thread. The thread of the extension 22 is engageable with a thread of a collar 62. One or more O rings may be used in embodiments to ensure a watertight seal between the connection component 24 and extension 22.

In Figure 2, the body portion 14 is shown without the removable cap 16, and not connected to the central heating system. The body portion 14 has a thread 64. The thread 64 is close to the end of the body portion 14 that engages with the removable cap 16. The thread 64 of the body portion 14 is engageable with a corresponding thread on the removable cap 16. An O ring 60 is shown on the body portion 14, for aiding the creation of a watertight seal when the removable cap 16 is attached.

Additionally, the extension 22 of the body portion 14 has a thread 66. Collar 62 of the connection component 24 also has a thread. The collar 62 thereby engages with the body portion 14 and allows attachment of the body portion 14 of the separator 10 to the connection component 24.

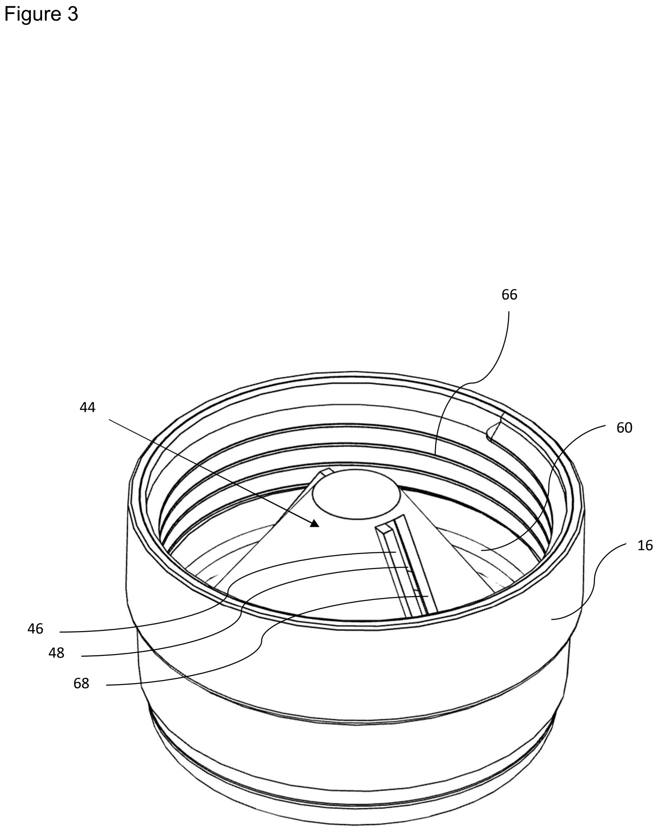

With reference to Figure 3, the removable cap 16 is shown when removed from the separator 10. A conical divider 44 is also shown, inside the cap. The conical divider 44 divides the interior of the separator into a high-flow region, above the divider, and a low-flow region below/inside the conical divider 44.

The conical divider 44 includes two bafflers 46. Each baffler 46 is a wall disposed on the upper / outer surface of the conical divider 44. Each baffler extends substantially perpendicularly from an outer surface of the conical divider 44. Each baffler 46 runs from a vertex of the conical divider 44 to a bottom edge of the conical divider 44. In use, the bafflers impede the flow of the water above the divider and remove some of the kinetic energy of the particles in the water that swirls through the separator. Each baffler 46 is adjacent to an aperture 48. Therefore, particles whose momentum is adequately reduced by the baffler 46 fall through the aperture to the low-flow region inside the hollow conical divider 44. The divider separates an area of high flow outside the divider, from a low-flow region below and within the conical divider. Settled debris is thereby somewhat protected from the flow of liquid through the separator. Debris therefore collects in the base of the collection portion 14. Because the collection portion 16 is removable, it can be removed for cleaning periodically.

With reference to Figure 4, internal components of the separator 10 are shown. Separator 10 has a turbine 33 and a mesh 32. The mesh 32, in contrast to the turbine 33, does not rotate with the flow of water (it instead locks into a casing, described below) so that there is relative motion between brushes 42 which clean the mesh 32, and the mesh 32.

The turbine 33 comprises a hollow cylinder 34. The hollow cylinder 34 is attached by radial struts to a central axle 36. The hollow cylinder 34 is also attached to an upper flange-shaped component 38. The upper flange-shaped component 38 has brushes 42 for brushing particles from the mesh 32.

The hollow cylinder 34 has vanes 40 attached to enable the whole turbine 33 to spin, driven by the flow of the water through the separator 10. The vanes 40 also direct the water downwards towards the low-flow region on the other side of the divider 44. The vanes are disposed on an outer surface of the hollow cylinder 34 of the turbine 33. The vanes 40 are disposed substantially longitudinally on the hollow cylinder 34, that is to say from a base to a top of the hollow cylinder 34. The vanes 40 are disposed at an angle to the vertical. The vanes 40 are curved. The vanes spiral around an outside of the hollow cylinder 34, which directs the flow of water downwards.

The mesh 32 has apertures of a sufficient size to obstruct a substantial proportion of debris particles. In particular, the apertures may be smaller than in previous concepts, as smaller apertures are possible without risking a debris blockage. The mesh can have an aperture size of around 300 microns (or in the range of 200 to 800 microns). Specifically, the mesh 32 may be a strainer, i.e. a device with holes punched in it or made of crossed wires for separating solid matter from a liquid. In a preferred embodiment, the mesh is a sheet with small holes punched into it, as shown in the close-up. This is preferable since it provides a smooth surface, between the holes, which can be cleaned by the brushes 42. The mesh 32 has a central aperture so as to fit over the axle 36. The mesh 32 is reinforced at its internal and external edges. The mesh 32 has periodic slots 68 around its circumference. The slots 68 engage with a casing 30, which remains stationary with respect to the turbine 33. The mesh 32 is substantially flat.

Brushes 42 are inlaid in the upper flange-shaped component 38. Specifically, the brushes are inlaid on an upper surface of the upper flange-shaped component. Each brush is arranged radially 42. Each brush 42 comprises brush filaments 70. The brush filaments extend 42 upwards from the upper flange 38. Each brush 42 is positioned so that the brush filaments 70 brush against the surface of the mesh 32 and thereby remove the debris as they rotate on the turbine 33. The debris can then be swept by the flow of water downwards through the separator 10 towards the removable cap 16 where it can settle in the low-flow region and be removed on servicing.

Apertures 50 are provided on the upper flange-shaped component 38. Apertures 50 are circular in profile. The apertures 50 are spaced around the edge of the upper flange-shaped component 38. The apertures 50 enable particles and debris that have been swept off the mesh 32 to be transported downwards towards the collection portion 16 of the separator 10. Because the apertures 50 are disposed around an outer edge of the upper flange-shaped component 38, they allow water and therefore debris to flow downwards to the removable cap. The middle of the separator 10 experiences an upwards flow of water which goes through the centre of the hollow cylinder 34.

With regards to Figure 6, the casing 30 can be seen surrounding internal components of the separator 10. The casing 30 engages with the inlet channel 72a of the connection component 24 to prevent the water flowing to the outlet channel 72b without going through the mesh 32 of the separator device 10. Within the casing 30 is the turbine 33 and the mesh 32. The casing 30 also provides a stationary platform on which to attach the mesh 32 so that there is relative motion between the mesh 32 and the rotating brushes 42.

In use, the first embodiment functions as follows. The central heating system will include a pump which forces water around a circuit. The water of the central heating system enters the body 14 of the separator 10 via the inlet valve 26a and is forced onto the vanes of the turbine 33, thereby rotating the turbine 33. The spiral blades of the turbine set up a swirl in the flow and direct the flow downwards. The swirling water then enters a lower section of the separator, where a portion of it has its motion impeded by the bafflers 46. The slowing of the water by bafflers 46 can cause some of the debris particles to 'fall' through apertures 48 to the other side of the conical divider 44 where they settle. The conical divider 44 somewhat protects the settled particles from the swirling of the water, and ensure they remain settled at the bottom of the removable cap 16.

The swirling water then flows upwards through the centre of the turbine 33 and towards the mesh. The water then passes through the mesh, at which point remaining particles are blocked by the mesh which prevents the particles from re-entering the central heating system.

The cleaned water then returns to the central heating system via outlet valve 26b. The outlet channel 72b is concentric with the inlet channel 72a and surrounds the inlet channel 72a.

Debris caught on the mesh is brushed off by brushes on the upper surface of flange 38 of the turbine 33. The dislodged debris is pulled through the apertures in the upper flange 38 and is pushed downwards by the downwards current between the turbine 33 and the casing 30, where at least a portion of it will settle into the low-flow region under the divider 44.

To clean the separator 10, the inlet and outlet valves can be closed to isolate the separator 10 from the heating circuit. The removable cap 16 can then be unscrewed from the rest of the separator 10. The conical divider 44 may be removed if necessary. The debris that has collected in the removable portion 16 can then be removed, and the removable cap 16 can be cleaned.

The body 14 can also be removed from the connection component 24 if required, and the mesh 32 in the body 14 can be cleaned. However, this should not need to be done every time.

Additionally, in use the separator should be orientated so that the body portion 14 is above the removable cap 16, so that gravity aids the settling of the debris in the base of removable cap 16.

Figure 8 shows another embodiment of the invention. The alternative embodiment is similar to the first embodiment, but the inlet and outlet are not concentric in this embodiment. Instead, the body portion has two discrete extensions 122a and 122b.

Extension 122a joins is an inlet, whilst extension 122b is an outlet. Each extension extends substantially perpendicularly from the same tangent of the body portion 114 of the separator 110. The extensions are parallel to each other. Extensions 122a, 122b comprise hollow cylinders. Each extension 122a, 122b has a thread to engage with valves (preferably 90 degree elbow valves) and connect to a central heating system circuit.

Additionally, in contrast to the first embodiment, the removable cap 116 comprises two protrusions 152a, 152b. The protrusions 152a, 152b can be used as handles to aid the removal of the removable cap 116.

With reference to Figure 9, extension 122a comprises a deflector 154a that covers a portion of the inlet. Extension 122b also comprises a deflector 154b. Each deflector 154a, 154b is a substantially planar wall, that blocks a segment of the profile of the respective inlet or outlet. The deflector 154a deflects water going through the inlet and thereby helps set up a swirl within the separator.

In Figure 10, a cross-section of the second embodiment is shown.

Referring to Figure 11, a cross-section of a third embodiment of the is shown. In most respects this third embodiment is the same as the first embodiment. However, the separator 210 includes a magnet 250. The magnet 250 aids the collection of magnetic particles suspended in the fluid. The magnet 250 is housed within the low-flow region 216, below divider 244. The magnet is substantially cylindrically shaped. The magnet 250 is surrounded by a sleeve. The magnet 250 is disposed along a longitudinal axis of the housing 212. The magnet 250 is disposed centrally within the low-flow region 216. The magnet 250 is disposed below and within the conical divider 244.

Figure 12 is a cross-section view of the third embodiment, with the flow of the fluid indicated by arrows.

In use, the water enters the body of the separator through the inlet (A) and hits the vanes of the turbine (B). The turbine spins and the blades swirl the water and push the water downwards (C) towards the divider. The water swirls around the outside of the conical divider and will hit the bafflers. This causes particles to lose energy and fall through the apertures in the divider (D), into the low-flow region beneath the divider. The magnet attracts and retains magnetic debris in the low-flow region, and nonmagnetic debris will in any case tend to settle in the bottom of the low-flow region.

Water then flows back up, through the centre of the turbine (E), and through the mesh (F). The mesh is fine and so any particles are removed from the flow, and the water (G) on the outlet side of the mesh has been completely cleaned.

The brushes release particles caught on the mesh, which are then sucked down through the apertures in the flange (H) by the downwardly-flowing water on the outside of the turbine.

Debris will tend to circulate within the separator, but will not clog the mesh. Over time, the debris will fall out of suspension and be collected in the low-flow region below the divider, where the magnet also helps to retain it and prevent it from re-entering the flow. The separator can be cleaned by isolating the separator by closing the valves removing the removable cap to drain out any water, and cleaning the divider which in this embodiment integrates a sleeve around the magnet. Particles may also settle on the inside of the removable cap, which can be cleaned very easily.

The embodiments described above are provided by way of example only, and various changes and modifications will be apparent to persons skilled in the art without departing from the scope of the present invention as defined by the appended claims.

## Claims

1. A separator for removing particles from suspension in central heating and/or cooling system fluid, comprising:
an inlet and an outlet for fluid;
a mesh between the inlet and the outlet;
a turbine comprising one or more vanes to allow a flow of fluid through the separator to rotate the turbine; and
one or more brushes or scrapers fixed to the turbine for removing particles from the mesh.

2. A separator as claimed in claim 1, in which fluid flows upwardly towards and through the mesh in use, particles being collected on an underside of the mesh.

3. A separator as claimed in claim 2, in which a particle settlement region is provided at a lower end of the separator.

4. A separator as claimed in claim 3, in which a divider is provided for defining the particle settlement region below the divider.

5. A separator as claimed in claim 4, in which the divider comprises one or more bafflers to remove momentum from the fluid, each baffler extending from a surface of the divider and being positioned adjacent to an aperture in the divider.

6. A separator as claimed in claim 4 or claim 5, in which the divider is substantially conical.

7. A separator device as claimed in any of the preceding claims, in which flow guiding formations are arranged to direct flow of fluid downwardly from the inlet, through a change of direction in a lower region of the separator and then upwardly towards and through the mesh.

8. A separator device as claimed in claim 7, in which the flow guiding formations are formed at least in part by the vanes of the turbine.

9. A separator device as claimed in claim 7 or claim 8, in which the downward flow of fluid draws particles away from the mesh, when the particles are removed from the mesh by the brushes or scrapers.

10. A separator device as claimed in any of claims 7 to 9, in which a wall is provided for separating the downwardly and upwardly flowing fluid flows.

11. A separator as claimed in any preceding claim, in which the one or more vanes are disposed on an outer cylindrical surface of a substantially cylindrical body of the turbine.

12. A separator as claimed in any preceding claim, in which the turbine is hollow, to allow fluid to flow through the inside of the turbine.

13. A separator as claimed in any preceding claim, in which the turbine has a flange at its upper end, and the one or more brushes or scrapers are disposed radially on the flange of the turbine.

14. A separator as claimed in any preceding claim, in which a deflector is disposed in the inlet of the separator, the deflector for example being in the form of a substantially planar wall that blocks a portion of the inlet.

15. A separator as claimed in any preceding claim, in which the separator comprises a chamber containing the mesh and a removable cap, in which the removable cap is detachable from the chamber, the cap being provided on a lower end of the chamber.

16. A separator as claimed in claim 13, in which the flange of the turbine has one or more apertures disposed around its outer edge, to allow debris that has been dislodged from the mesh to be sucked through the flange by the fluid flow on the outside of the turbine.

17. A separator as claimed in any previous claim, in which the separator includes a magnet.
